# EUROPEAN PATENT APPLICATION

(11) **EP 2 374 845 A2**
(43) Date of publication of application: **12.10.2011**
(21) Application number: 11161452.5
(22) Date of filing: 07.04.2011
(51) Int. Cl.: C08K 7/14

(54) **Improved composition**

(30) Priority: 09.04.2010 GB 1005927
(71) Applicant: Lewis Banks Ltd, t/a GBRacing, Therfield, Hertfordshire SG8 9CH (GB)
(72) Inventor: Banks, Graham, Therfield, Hertfordshire SG8 9QH (GB)
(74) Representative: Instone, Alicia Claire

(57) **Abstract**

A composition for use in injection molded protective articles including:
a) a polymeric material; and
b) long glass fibres.

Preferred additives including:
a) a flow modifier;
b) an impact modifier; and
c) an impact stabiliser.

A protective article formed from the composition.

## Description

### Field of the Invention

The present invention relates to a composition and an article including the composition for use as a secondary engine cover and secondary engine covers in general. It is particularly applicable to a composition and an article including the composition for use as a motorcycle secondary engine cover and motorcycle secondary engine covers in general.

### Background of the Invention

When a motorcycle crashes the stock metal engine covers invariably hit the ground, and can break or wear away, causing an oil spill. When excessive impact or wear is present the stock cover will either crack, with either the initial or subsequent impact, or wear right through the stock metal engine cover, when the motorcycle travels for a long duration on its side.

This leads to the engine oil spilling out on to the track or road. This causes a very hazardous oil spill for other motorcycles and other vehicles in general. In the case of other motorcycles this invariably leads to more and potentially fatal crash scenarios.

The conventional method for protecting the stock metal covers are to attach a composite material such as carbon fibre or Kevlar RTM, or replaceable billet aluminium or steel plates and/or bars. These methods are either very costly or are inadequate in practice.

Another method is to attach a material such as polycarbonate which although provides good protective properties, these properties are rendered obsolete on contact with petroleum, or long term UV exposure. Given spillage often occurs on re-fuelling especially in race scenarios, a product which is likely to fail on exposure to petroleum will not give the required level of comfort that damage to the bike and thus an oil spill will not occur after a crash

### Summary of the Invention

According to a first aspect of the present invention there is provided a composition for use in injection molded protective articles including:
a) a polymeric material; and
b) long glass fibres.

This use of this composition in injection molded protective articles advantageously results in a protective article which is of significantly reduced cost compared with replacing the damaged part ie an engine cover casing after a fall on a motorcycle. As the protective article can be produced at a significantly reduced cost there is more benefit to the owner of an eg motorcyle to use a protective article, resulting in oil spills from cracked or worn primary eg engine cover casings.

The composition also allows for absorption of forces which are generated on impact, because forces are absorbed by the composition the protective article does not shatter and break on impact, thus transmitting the forces directly to the primary eg engine cover casing and therefore the engine that it is supposed to be protecting.

The composition also allows for increased wear compared with the stock eg engine cover casings and compared with the prior art Carbon Fibre or Kevlar (RTM) secondary eg engine cover casings. This means that the protective article does not necessarily need to be replaced every time the protective article comes into contact with the ground in a crash. If the crash is only minor and not at high speed and not over a long distance then there may only be a small amount of wear or scuffing on the protective article meaning it can be left in place without needing to be changed, whereas in the same crash with the stock or prior art articles a change would have been required.

Preferably the polymeric material is selected from polyamides, polyesters, polyalkenes, and silicones. These polymeric materials are generally resistant to contact with petroleum, or long term UV exposure. The polyamide may be selected from polyphthalamide (PPA), polycaprolactam (nylon 6), polyhexamethylene adipamide (nylon 6,6) and aromatic polyamides (Aramid Fibres). The polyalkene may be selected from polyethylenes (PE), polypropylenes (PP) and polytetrafluroethylenes (PTFE). The polyester may be selected from polyterephthalic acid (PTA).

Preferably the composition includes 50-70% long glass fibres. The long glass fibres provided for increased wear and protection of the composition when formed into a protective article. The inclusion of 60% long glass fibres is particularly beneficial because it allows a balance of high wear properties with a balance of impact properties.

Preferably the composition further includes a flow modifier. Preferably the flow modifier is an easy mold flow modifier. The use of an easy flow modifier not only assists when using the composition in the injection molding process itself, which is the preferred method of forming the protective article, but also results in much stronger protective article. The easy flow modifier means that the long glass fibres flow more smoothly into the mold, which results in less breakage of the fibres and in turn a much stronger protective article as more of the fibres remain long and reinforce the polymeric material. A particularly preferred easy flow modifier is molybdenum disulfide. This is because molybdenum disulfide not only acts as an easy flow modifier, but also acts as a tracer element to aid detection of the composition when formed into a protective article. This is advantageous as the molybdenum disulfide is readily detectible in the protective article formed from the composition and acts as a method for detecting whether the protective article is in fact formed from the composition of the invention or a different composition. A preferred amount of molybdenum disulfide is 3% to 5% of the total composition.

Preferably the composition further includes an impact modifier and/or an impact stabiliser.

According to a second aspect of the present invention there is provided a protective article formed from a composition as defined above, which is in particular a protective article for a motorcycle, such as a secondary engine cover.

Preferably the protective article bolts on over the top of the existing stock eg engine cover casing. This is advantageous as there is no need to break the gasket seal on the existing stock eg engine cover casing and is simply placed over the top. This is also advantageous as it is bolt on bolt off for ease of replacement when required.

According to a third aspect of the present invention there is provided a method of making a protective article according to any of claims 12 to 15 including the steps of:
a) providing a composition as claimed in any of 1 to 11;
b) providing a mold of the protective article;
c) introducing the composition into the mold; and
d) removing the protective article from the mold.

Preferably the method uses injection molding. This allows for a mold to be created which provides for a protective article which is thicker or thinner where required in order to provide the best level of protection rather than being of a uniform thickness which could result in wastage of material or two thin a protective article which is subject to fail.

### Brief Description of the Drawings

Figure 1 illustrates a protective article formed from a composition according to the present invention.
Figure 2 illustrates a protective article formed from a composition according to the present invention.
Figure 3 illustrates a protective article formed from a composition according to the present invention.
Figure 4 illustrates two protective articles formed from a composition according to the present invention in situ on a motorcycle.
Figure 5 illustrates a protective article formed from a composition according to the present invention in situ on a motorcycle.

### Detailed Description of the Preferred Embodiments

According to an embodiment of the present invention there is provided a composition which includes:
a) a polymeric material; and
b) long glass fibres.

The long glass fibres are present in a range of 50% to 70%, in an embodiment the long glass fibres are present in a range of 60%.

According to another embodiment of the present invention the composition may additionally include a flow modifier. The flow modifer in an embodiment is Molybdenum Disulfide and is present in a range of 3% to 5%.

According to another embodiment of the present invention the composition may additionally include an impact modifier and/or an impact stabiliser.

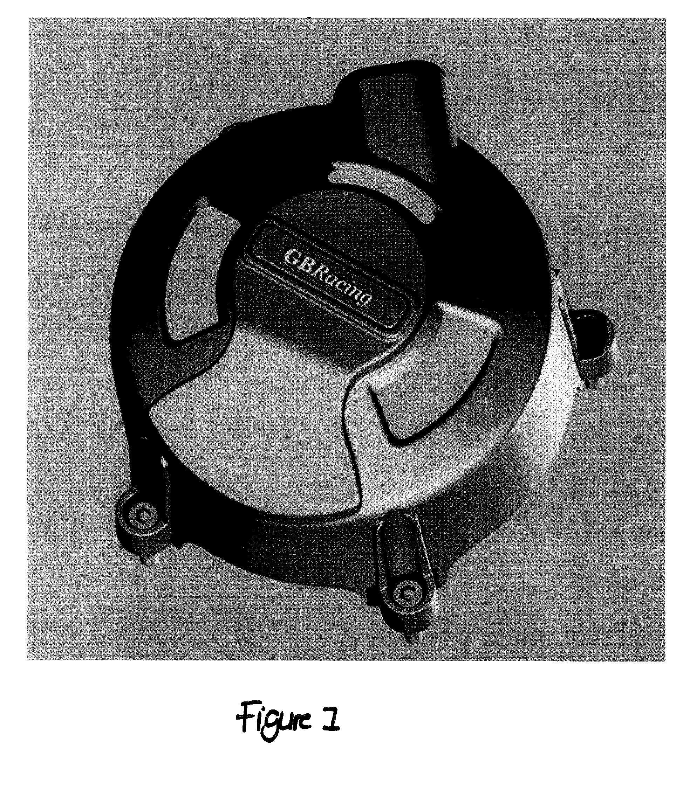

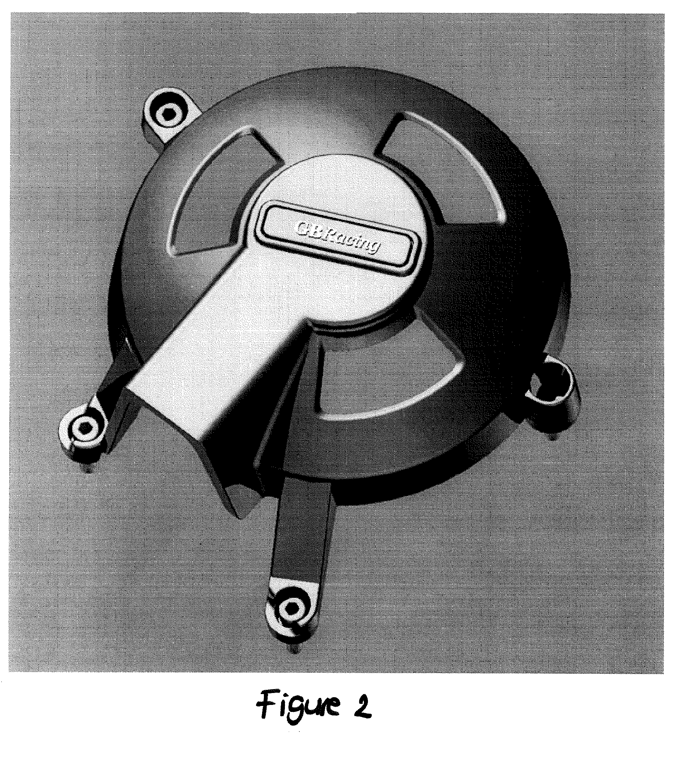

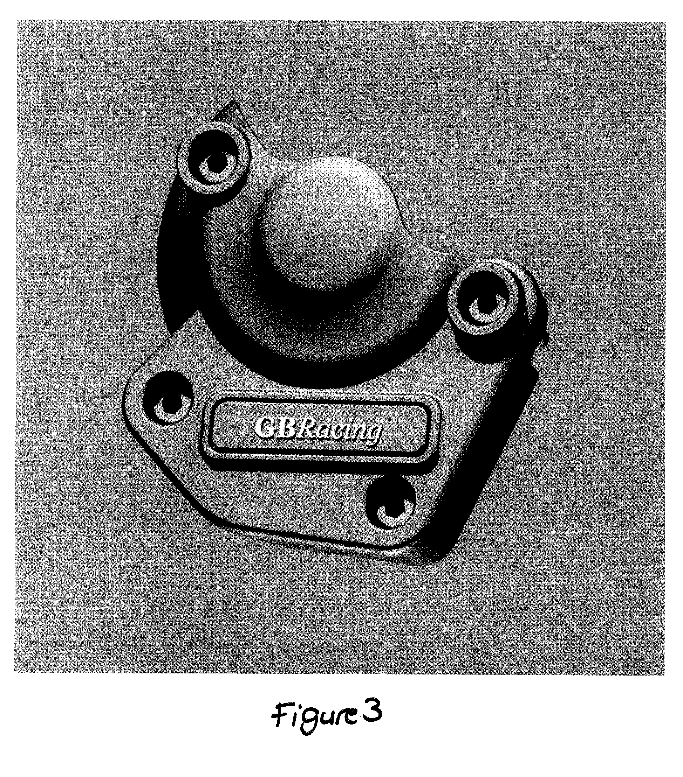

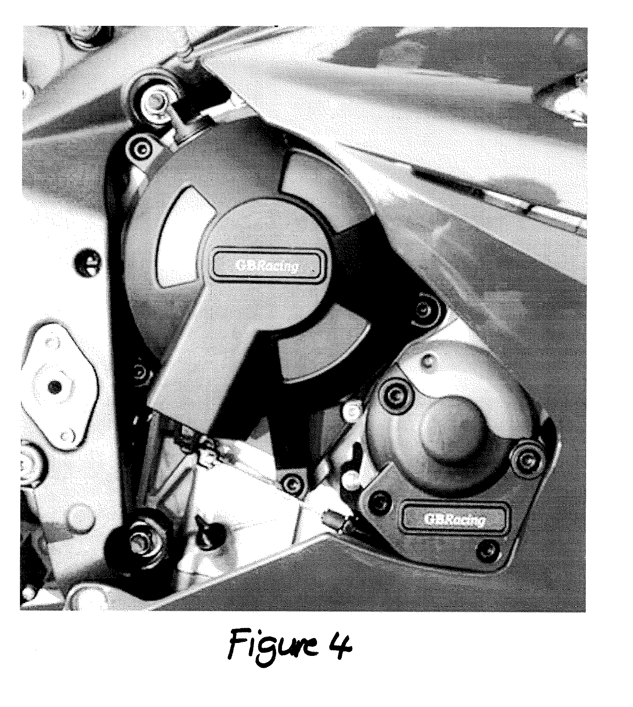

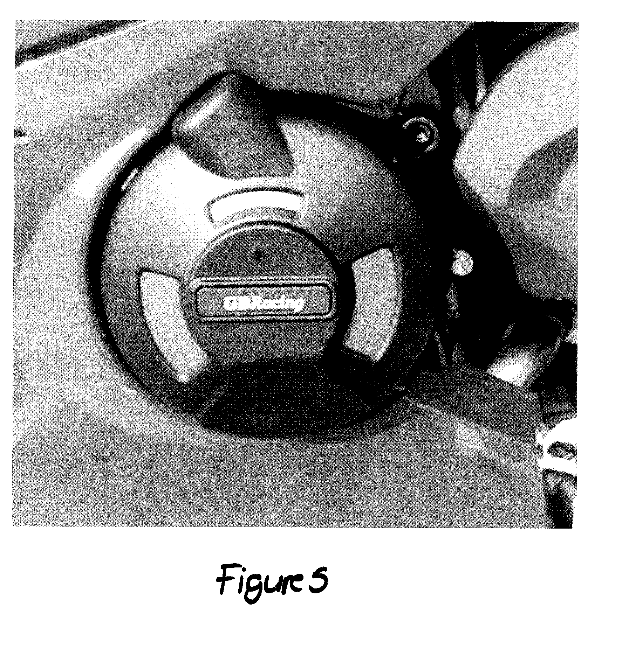

The composition is used in injection molding to form a protective article for a motorbike as illustrated in Figures 1 to 5.

### Example

The polymeric material is nylon 6.6.

The long glass filled fibres are present in a level of 60% of the total composition. The flow modifier is Molybdenum Disulfide and is present in a level of 3-5% of the total composition.

Properties and average values of injection molded specimens made to the Example given above:

### Permanence

Primary Additive - long glass fibres 60 %
Specific Gravity - 1.71 (test D 792)
Molding Shrinkage

(1/8 in) 3.2 mm section (0.1000 - 0.3000 in/in) 10.00 - 30.00 % (test) D 955 Mechanical

### Impact Strength, Izod

notched - (1/8 in) 3.2 mm section (9.0 ft-lbs/in) 481 J/m (test D 256)
unnotched - (1/8 in) 3.2 mm section (27.0 ft-lbs/in) 1442 J/m (test D 4812)
Tensile Strength - (40000 psi) 276 MPa (test D 638)
Tensile Elongation -1.5 - 2.5 % (test D 638)
Tensile Modulus - (3.10 x 10^6 psi) 21374 MPa (test D 638)
Flexural Strength - (61000 psi) 421 MPa (test D 790)
Flexural Modulus - (2.80 x 10^6 psi) 19306 MPa (test D 790)

### Property Notes

Data herein is typical and not to be construed as specifications.

Unless otherwise specified, all data listed is for natural or black coloured materials. Pigments can affect properties.

### General processing for Injection molding

Injection pressure - (10000-18000 psi) 69-124 MPa
Melt temperature - (530-570°F) 277-299°C
Mold temperature - (150-255°F) 66-107°C
Drying - (4 hours @ 175°F) 4 hours @79°C
Moisture content 0.20%
Dew point (0°F) -18°C

Processing Results

Desiccant type dryer required

## Claims

1. A composition for use in injection molded protective articles including:
a) a polymeric material selected from polyamides, polyesters, polyalkenes, and silicones; and
b) long glass fibres;

2. A composition as claimed in Claim 1 wherein the polyamide is selected from polyphthalamide (PPA), polycaprolactam (nylon 6), polyhexamethylene adipamide (nylon 6,6) and aromatic polyamides (Aramid Fibres).

3. A composition as claimed in Claim 1 wherein the polyalkenes are selected from polyethylenes (PE), polypropylenes (PP) and polytetrafluroethylenes (PTFE).

4. A composition as claimed in Claim 1 wherein the polyester is selected from polyterephthalic acid (PTA).

5. A composition as claimed in any preceding claim including 50-70% long glass fibres.

6. A composition as claimed in any preceding claim including a flow modifier.

7. A composition as claimed in any preceding claim wherein the flow modifier is an easy mold flow modifier.

8. A composition as claimed in Claim 7 wherein the easy flow modifier is selected from molybdenum disulfide.

9. A composition as claimed in Claim 8 including 3-5% molybdenum disulfide.

10. A composition as claimed in Claim 8 or Claim 9 wherein the molybdenum disulfide acts as a tracer element to aid detection of the composition when formed into a protective article.

11. Use of a composition as claimed in any of claims 1 to 10 for the manufacture of a protective article.

12. Use of a composition as claimed in claim 11 for the manufacture of a protective article for a motorcycle.

13. A protective article formed from a composition as claimed in any of claims 1 to 10.

14. A protective article as claimed in Claim 13 wherein the protective article is a protective article for a motorcycle.

15. A method of making a protective article according to Claim 13 or Claim 14 including the steps of:
a) providing a composition as claimed in any of 1 to 10;
b) providing a mold of the protective article;
c) introducing the composition into the mold; and
d) removing the protective article from the mold.
